Europäisches Patentamt

European Patent Office

Office européen des brevets

(11) Publication number: **0 117 978**
A1

## (12) EUROPEAN PATENT APPLICATION

(21) Application number: **84100387.4**

(22) Date of filing: **16.01.84**

(51) Int. Cl.³: **C 08 F 4/32**
C 08 F 2/16, C 09 J 3/14

(30) Priority: **07.02.83 US 464449**

(43) Date of publication of application:
**12.09.84 Bulletin 84/37**

(84) Designated Contracting States:
**AT BE CH DE FR GB IT LI NL SE**

(71) Applicant: AMERICAN CYANAMID COMPANY
1937 West Main Street P.O. Box 60
Stamford Connecticut 06904(US)

(72) Inventor: Ling, Chi-Fei
8 Richmond Road
Edison New Jersey 08817(US)

(74) Representative: Wächtershäuser, Günter, Dr.
Tal 29
D-8000 München 2(DE)

(54) Novel process for polymers.

(57) Novel polymerization process comprising reacting at least one monomeric compound, containing a polymerizably reactive $CH_2 = C\!\!<$ group, and an organic reducing agent, in an aqueous medium in the presence of a hypohalous acid, or a salt of a hypohalous acid, said organic reducing agent being oxidizable by said hypohalous acid, or salt of hypohalous acid, to initiate said polymerization, said hypohalous acid, or salt of hypohalous acid, being soluble in the reaction mixture. In accordance with the present invention, there are also provided water-resistant, or water-soluble, products obtained by the aforedescribed polymerization process. When said reducing agent is a polymer, the product thus obtained is a so-called graft copolymer.

424

# NOVEL PROCESS FOR POLYMERS

This invention relates to a process for the polymerization of polymerizable vinyl and/or vinylidene compounds to prepare water-resistant, or water-soluble, materials, to the products thereby obtained, and to the use of such products as adhesives.

In accordance with the present invention, there is provided a novel polymerization process comprising reacting at least one monomeric compound, containing a polymerizably reactive $CH_2 = C<$ group, and an organic reducing agent, in an aqueous medium in the presence of a hypohalous acid, or a salt of a hypohalous acid, said organic reducing agent being oxidizable by said hypohalous acid, or salt of hypohalous acid, to initiate said polymerization, said hypohalous acid, or salt of hypohalous acid, being soluble in the reaction mixture. In accordance with the present invention, there are also provided water-resistant, or water-soluble, products obtained by the aforedescribed polymerization process. When said reducing agent is a polymer, the product thus obtained is so-called graft copolymer.

The present invention also affords a process whereby surfaces of cellulosic materials are bonded together by applying thereto the products of the above-described polymerization process, and allowing the applied material to set until it has hardened, and the bonded products obtained thereby.

The use of hypohalous acids, and salts of hypohalous acids, as oxidizing agents has long been known in the art, for example, the oxidation of primary and secondary alcohols to aldehydes and ketones, respectively. However, there is nothing in the literature which teaches trapping the oxidation intermediate, a free radical, with a polymerizable vinyl and/or vinylidene compound to provide polymers.

By the proper choice of reducing agent and polymerizable compound containing $CH_2 = C$ , one can prepare a wide variety of water-soluble, or water-insoluble, polymers which are useful as adhesives, paper and textile sizes, flocculants, thickeners, water-absorbents, and film-formers.

The present invention offers the following advantages:

1. Very little, if any homopolymerization of the monomer occurs in the presence of a polymeric reducing agent; that is, only graft copolymer is obtained.

2. No discoloration is imparted to the treated materials.

3. The products can be prepared in a simple, low-cost process.

In carrying out the polymerization process of this invention, a polymerizable monomer containing a $CH_2 = C$ group is stirred under an inert atmosphere with an organic reducing agent and a hypohalous acid, or salt of a hypohalous acid, which is capable of oxidizing said organic reducing agent and thus initiate the polymerization of the $CH_2 = C$ - containing monomer. This reaction is carried out at ambient temperature to about 75°C at pH 4-13 for about 8 hours to about 0.25 hour, preferably at ambient temperature to about 50°C below pH 7 for about 2 hours to about 0.50 hour. Optionally, any unreacted monomer can be homopolymerized by adding ammonium persulfate and sodium metabisulfite to the reaction mixture.

Suitable polymerizable monomers include the following:

vinyl acetate,

methyl acrylate,

n-butyl acrylate,

2-hydroxyethyl acrylate,

2-methoxyethyl acrylate,

methyl methacrylate,

acrylamide,

N-(1,1-dimethyl-3-oxobutyl)acrylamide, acrylonitrile,

acrylic acid,

methacrylic acid,

2-chloroacrylic acid,

and the like.

As used herein, the term "aqueous medium" is defined as water, or a mixture of water and a water-miscible solvent such as

N,N-dimethylformamide,

dimethylsulfoxide,

dioxane,

and the like.

The reducing agent may be an alcohol, aldehyde, ketone, acetal, oxime, aminocarboxylic acid, primary amine, hydroxycarboxylic acid, ketoacid, ketoester, ketoamide, or carboxylic acid. The reducing agent may be monomeric, or polymeric, and may be a component of the polymerizable monomer.

Suitable reducing agents, which may be used in the present invention, include the following:

methanol,

ethanol,

ethylene glycol,

glycerol,

3-chloro-1-propanol,

bis(2-hydroxyethyl)ether,

polyvinyl alcohol,

glucose,

sucrose,

cellulose

rayon,

starch,

modified starches,

dextrons,

polygalactosides,

N,N-diethylethanolamine,

N-methyldiethanolamine,

triethanolamine,

acetic acid,

lactic acid,

glycolic acid,

glycine,

acetone,

2,2-dimethoxypropane,

acetone oxime,

3-hydroxy-3-methylbutanone,

formaldehyde,

acetaldehyde,

methylamine,

ethylamine,

triethylamine,

isopropylamine,

n-butylamine,

ethylenediamine,

N-methyldiethanolamine,

N,N-diethylethanolamine,

triethanolamine,

and the like.

Illustrative examples of suitable hypohalite sources include the following:

sodium hypochlorite,

potassium hypochlorite,

calcium hypochlorite,

sodium hypobromite,.

hypochlorous acid,

and the like.

The amount of reducing agent used in the practice of the process of the present invention may range from about 1% to about 200% by weight, based on the wright of the monomer, preferably about 10% to about 100%, based on the weight of the polymerizable monomer.

The amount of hypohalous acid, or salt of hypohalous acid, used in the practice of the present invention, may range from about $10^{-3}$ to about $10^{-1}$ mole per mole of polymerizable monomer. Preferably, about $10^{-2}$ mole of hypohalous acid, or salt of hypohalous acid, is used per mole of polymerizable monomer.

In the examples which follow, all parts and percentages are by weight, unless otherwise indicated, a solution containing 50% by weight of acrylamide in water is referred to as "AMD," and a solution containing 5.25% by weight of sodium hypochlorite in water is referred to as "SHC."

### Example 1

The pH of a slurry of 20 grams of corn starch (natural, unmodified) in 60 grams of water is adjusted to 9-10 by the addition of 5N sodium hydroxide thereto, and the slurry is purged with nitrogen for 10 minutes. SHC (8 mls) is added to the slurry, and five minutes later 40 grams of nitrogen-purged AMD are added thereto. The resulting mixture is stirred at ambient temperature until it becomes a sticky gel in less than an hour.

Repeated extraction of the gel with formamide and drowning of the extract into methanol failed to produce any polyacrylamide homopolymer.

### Example 2

Starch (55 grams of waxy maize), 120 grams of AMD, 100 grams of 5% sodium hydroxide, and 105 grams of water are charged to a one-liter reaction flask, and heated at 50°C. for one and one-half hours while stirring. The mixture is cooled to room temperature, and the pH is adjusted to 7-8 by adding concentrated nitric acid thereto. An additional 50 grams of AMD are added to the reaction mixture, now containing carbamoylethylated starch, and the mixture is purged with nitrogen for 20 minutes.

SHC (16 grams) is purged with nitrogen for 20 minutes, and then added to the reaction mixture. The resulting exotherm causes the temperature to rise to 50°C. The reaction mixture is then cooled to room temperature, stirred thereat for 1.5 hours, and diluted with water to a final weight of 675 grams.

The final product has good adhesive properties on paper.

Example 3

Sucrose (10 grams), 80 grams of AMD, and 40 grams of water are mixed at room temperature, and 2 grams of 50% caustic are added thereto. The mixture is then heated at 65°C. for one hour, cooled to room temperature, neutralized with 71.4% nitric acid, and purged with nitrogen. SHC (20 grams) is added thereto, and the mixture is heated to 65°C., and held thereat for one hour, while sparging with nitrogen. Cooling the reaction mixture to ambient temperature gives a viscous product.

This material, when applied to a piece of fabric composed of 50% cotton and 50% polyester, at a 5% by weight add-on, imparts stiffness to the fabric.

Example 4

A mixture of 100 grams of a 10% aqueous solution of polyvinyl alcohol, 40 grams of AMD, and 10 grams of water is adjusted to pH 9 with dilute caustic soda, and then purged with nitrogen for 10 minutes. SHC (5 grams) is added thereto, and the mixture is stirred at room temperature for one minute while sparging with nitrogen. The temperature is then raised to 50°C., and the mixture is stirred thereat for an hour. At this point, the mixture is cooled to ambient temperature to obtain a very thick, sticky product.

Example 5

A mixture of 9 grams of bis(2-hydroxyethyl)ether, 72 grams of AMD, and 83 grams of water is purged with nitrogen for 10 minutes, then SHC (50 grams) is added thereto at 20°C. Over a period of 2 hours, the temperature only rises to 22°C., and the solution does not become very viscous, even though formation of a polymer is evidenced by the precipitation of a white powder upon drowning the reaction mixture into methanol.

## Example 6

The procedure of Example 5 is followed in every detail except that 9 grams of an aqueous solution containing 45% by weight of methylamine are added to the initial mixture before purging with nitrogen.

The addition of the SHC results in an exotherm which raises the temperature from 23°C. to 31°C. and results in the formation of a viscous solution.

A comparison of Example 6 with Example 5 illustrates the effect of presence of the amine in competition with the bis(2-hydroxyethyl)ether.

## Example 7

A mixture of 6 grams of triethanolamine, 68 grams of AMD, and 96 grams of water is stirred at room temperature, and purged with nitrogen. SHC (30 grams) is added to the mixture over a period of about 10 minutes, and the temperature is allowed to rise to 38°C. When the temperature begins to subside, the reaction mixture is heated to 50°C., and held thereat for 0.5 hour. At this point, ammonium persulfate (0.3 gram in 5 grams of water), and sodium metabisulfite (0.3 gram in 5 grams of water) are added to the reaction mixture to convert any unreacted acrylamide to polyacrylamide. After the resulting exotherm subsides, the reaction mixture is cooled to ambient temperature. A 20% by weight solution of the product in water has a viscosity of 6000 centipoises.

## Example 8

A mixture of 9 grams of triethanolamine, 7.5 grams of n-butyl acrylate, 95 grams of water, and one gram of a nonionic surfactant (DECERESOL® Surfactant NI Conc.; American Cyanamid Co.) is purged with nitrogen. SHC (45 grams) is added thereto and the temperature of the reaction mixture is allowed to rise spontaneously. The resulting emulsion is heated to 80°C., at which point coagulation occurs indicating the formation of a polymeric material, poly(butyl acrylate).

## Example 9

A mixture of 3 grams of triethylamine, and 10 grams of 2-methoxyethyl acrylate, is diluted with water to a final weight of 100 grams. The mixture is purged with nitrogen for 5 minutes, and 25 grams of SHC are added thereto. After stirring for several minutes at ambient temperature, a polymeric material precipitates. This material is dispersible in water, and soluble in methanol.

In the manner described above, substituting 3 grams of trimethylamine for triethylamine, similar results are obtained.

### Example 10

A mixture of 10 grams of glycerol, 20 grams of AMD, 50 grams of water, and 20 grams of SHC is stirred at room temperature while purging with nitrogen. After about 0.5 hour, a one ml aliquot is withdrawn and drowned in methanol. A white precipitate is formed immediately, indicating the formation of a polymeric material.

Similar results are obtained by substituting ethanol, ethylene glycol, N-methyldiethanolamine, or glucose for the glycerol.

### Example 11

The procedure of Example 10 is followed in every detail except that no glycerol or alcohol of any kind is used, and the amount of water used is increased to 60 grams. No precipitation of polymer is observed even after stirring the reaction mixture at room temperature for 24 hours.

### Example 12

A mixture of 7.4 grams of formaldehyde (37%), and 20 grams of AMD, is diluted with water to a final weight of 100 grams. The mixture is then purged with nitrogen for 5 minutes, and 25 grams of sodium hypobromite (8% solution) are added thereto. After stirring for one hour, while purging with nitrogen, the mixture is drowned in methanol (500 mls) and the polymeric precipitate is collected by filtration. The polymer can be readily redissolved in water, from which a film can be cast.

Similar results are obtained by substituting 4.0 grams of acetaldehyde for the formaldehyde.

### Example 13

A mixture of 5.3 grams of acetone, and 20 grams of AMD, is diluted with water to a final weight of 100 grams. The mixture is purged with nitrogen for 5 minutes and 25 grams of SHC are added thereto. After stirring under nitrogen for one hour, the mixture is drowned in methanol (500 mls), and the polymeric material that precipitates is collected by filtration. The polymer can be readily redissolved in water, from which a film can be cast.

Similar results are obtained by substituting 9.6 grams of 2,2-dimethoxypropane, 6.7 grams of acetone oxime, or 9.4 grams of 3-hydroxy-3-methylbutanone for the acetone.

### Example 14

The procedure of Example 13 is followed except that 7.0 grams of glycolic acid are used instead of acetone, and the pH is adjusted to 6 after adding the SHC. Similar results are obtained.

Similar results are also obtained by substituting 8.3 grams of lactic acid, or 7.0 grams of glycine for the lactic acid.

### Example 15

A solution is formed by warming 10 grams of N-(1,1-dimethyl-3-oxobutyl)acrylamide in 40 grams of water, and 25 grams of SHC are added thereto. The mixture is purged with nitrogen for 5 minutes and then stirred overnight at ambient temperature. The white product that precipitates is collected by filtration. The polymeric material, which is insoluble in hot water, swells in methanol and dimethylformamide, and dissolves in chlorobenzene, is identified as poly(diacetone acrylamide).

In the manner described above, substituting 10 grams of 2-hydroxyethyl acrylate for the N-(1,1-dimethyl-3-oxobutyl) acrylamide, a gelatinous material is obtained within 2.5 hours.

The above examples illustrate the process of the present invention wherein the polymerizable monomers contain carbonyl and hydroxyl groups.

### Example 16

Chlorine (2 grams) is bubbled into a slurry of 10 grams of calcium carbonate in 60 grams of water. A portion (25 grams) of the resulting supernatant liquid, containing hypochlorous acid, is removed and added to a mixture of 20 grams of AMD, one gram of calcium carbonate, 9 grams of ethanol, and 45 grams of water. The resulting mixture is stirred, under nitrogen, at room temperature, for 2 hours and then drowned in methanol. The resulting polymeric precipitate is then collected by filtration.

The above example illustrates the process of the present invention utilizing a hypohalous acid.

WHAT IS CLAIMED IS:

1. A process for the polymerization of a monomeric compound containing a polymerizably reactive $CH_2 = C{<}$ group in an aqueous medium, by free radical means, said free radical means being generated in said aqueous medium by the reaction of an organic reducing agent and a hypohalous acid, or a salt of a hypohalous acid, which is soluble in said aqueous medium.

2. The process according to Claim 1, wherein the said reducing agent is an aliphatic amine.

3. The process, according to Claim 1, wherein said reducing agent is a hydroxyl-containing compound.

4. The process of Claim 3 wherein said hydroxyl containing compound is a polymer.

5. The process according to Claim 4, wherein said hydroxyl-containing compound is starch.

6. The process, according to Claim 4, wherein said hydroxyl-containing compound is sucrose.

7. The process according to Claim 4, wherein said hydroxyl-containing compound is polyvinylalcohol.

8. The process according to Claim 1, wherein the monomeric compound is acrylamide.

9. The process, according to Claim 1, wherein the salt of hypohalous acid is sodium hypochlorite.

10. The process, according to Claim 2, wherein the aliphatic amine is triethanolamine.

11. A composition produced by the process of Claim 1.

12. A process for bonding together surfaces of cellulosic materials comprising applying to said surfaces the composition of Claim 11, and allowing the applied material to set until it is hardened.

European Patent Office

**EUROPEAN SEARCH REPORT**

0117978

Application number

EP 84 10 0387

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-2 594 560 (E.G. HOWARD)  * Claim 1 * | 1,2,8 9,11 | C 08 F 4/32<br>C 08 F 2/16<br>C 09 J 3/14 |
| X | US-A-2 775 579 (M. ERCHAK)  * Claim 1 * | 1,2,8 9,11 | |
| A | US-A-3 022 281 (E.S. SMITH)  * Claim 1 * | 1 | |

TECHNICAL FIELDS SEARCHED (Int. Cl. 3)

C 08 F

The present search report has been drawn up for all claims

| Place of search THE HAGUE | Date of completion of the search 14-05-1984 | Examiner CAUWENBERG C.L.M. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82